# EUROPÄISCHE PATENTANMELDUNG

(11) **EP 0 602 433 A2**
(43) Veröffentlichungstag der Anmeldung: **22.06.1994**
(21) Anmeldenummer: 93119135.7
(22) Anmeldetag: 27.11.1993
(51) Int. Cl.: B60K 15/04, B60K 15/077

(54) **Behälterverschluss**

(30) Priorität: 16.12.1992 DE 4242599
(71) Anmelder: TEMTEC FAHRZEUGTECHNIK ENTWICKLUNGSGESELLSCHAFT mbH, D-83064 Raubling (DE)
(72) Erfinder: Kunz, Georg, Dipl.-Ing. (FH), D-83024 Rosenheim (DE); Temmesfeld, Angelika Barbara Maria, D-83064 Raubling (DE)
(74) Vertreter: Kehl, Günther, Dipl.-Phys.

(57) **Zusammenfassung**

Behälterverschluß mit einer selbstschließenden am Mündungsrand eines Einfüllstutzens (1) angeordneten Verschlußeinrichtung, die aus einem Verschlußteil (2) und einer durch das Verschlußteil (2) verschließbaren Einfüllöffnung (3) besteht, zwischen deren Rand und einer einzuführenden Zapfpistole (4) ein Gasaustrittsspalt für beim Befüllen des Behälters austretende Gase verbleibt, und mit einem Führungsrohr (5) zur Aufnahme der Zapfpistole. Um die austretenden Gase von Flüssigkeitströpfchen zu befreien, ist vorgesehen, daß das Führungsrohr (5) einen die Zapfpistole (4) eng umschließenden Verjüngungsabschnitt (5a) aufweist, daß an der zum Einfüllstutzen (1) gelegenen Seite des Verjüngungsabschnittes (5a) Austrittsöffnungen (6) vorgesehen sind, über die die Gase aus dem Führungsrohr (5) nach außen treten, daß an der vom Behälter abgewandten Seite des Verjüngungsabschnittes (5a) Eintrittsöffnungen (7) angeordnet sind, über die Gase in das Innere des Führungsrohres (5) eintreten, und daß eine die Austrittsöffnungen (6) und die Eintrittsöffnungen (7) strömungsmäßig verbindende Leiteinrichtung vorgesehen ist.

## Beschreibung

Die Erfindung bezieht sich auf einen Behälterverschluß mit einer selbstschließenden am Mündungsrand eines Einfüllstutzens angeordneten Verschlußeinrichtung, die aus einem Verschlußteil und einer durch das Verschlußteil verschließbaren Einfüllöffnung besteht. zwischen deren Rand und einer einzuführenden Zapfpistole ein Gasaustrittsspalt für beim Befüllen des Behälters austretende Gase verbleibt, und mit einem Führungsrohr zur Aufnahme der Zapfpistole.

Wenn bei einem solchen Behälterverschluß mit einer Zapfpistole die Verschlußeinrichtung geöffnet wird, können unter Druck stehende Dämpfe und mit ihnen mitgerissene Flüssigkeitspartikel über den Gasaustrittsspalt rings um die Zapfpistole austreten und die Flüssigkeitspartikel können die Person verletzen, die die Zapfpistole bedient. Dies ist insbesondere bei Kraftstoffbehälterverschlüssen der Fall, bei denen die Gefahr besteht, daß Benzinspritzer in das Gesicht oder gar in das Auge der Bedienungsperson gelangen.

Der Erfindung liegt die Aufgabe zugrunde, einen Behälterverschluß der eingangs genannten Art zu schaffen, bei dem die Gefahr einer Verletzung oder Belästigung der Bedienungsperson durch in dem Gasaustrittsstrom enthaltene Flüssigkeitströpfchen weitgehend vermieden ist.

Diese Aufgabe ist dadurch gelöst, daß das Führungsrohr einen die Zapfpistole eng umschließenden Verjüngungsabschnitt aufweist, daß an der zum Einfüllstutzen gelegenen Seite des Verjüngungsabschnittes Austrittsöffnungen vorgesehen sind, über die die Gase aus dem Führungsrohr nach außen treten, daß an der vom Behälter abgewandten Seite des Verjüngungsabschnittes Eintrittsöffnungen angeordnet sind, über die die Gase in das Innere des Führungsrohres eintreten, und daß eine die Austrittsöffnungen und die Eintrittsöffnungen strömungsmäßig verbindende Leiteinrichtung vorgesehen ist.

Bei dem erfindungsgemäßen Behälterverschluß wird der aus dem Behälter beim Befüllen desselben austretende Gasstrom mehrfach umgelenkt, nämlich einmal radial nach außen und danach wiederum radial nach innen in das Innere des Führungsrohres, sodaß Flüssigkeitströpfchen auf diesem Weg weggeschleudert werden und den Gasstrom verlassen.

Für die Umlenkung des Gasstroms sorgt eine Leiteinrichtung, die nach einer bevorzugten Ausführungsform der Erfindung aus einem Gehäuse besteht, das das Führungsrohr und den Mündungsrand des Einfüllstutzens dicht umschließt. Die aus dem Behälter austretenden Dämpfe können somit nicht in das Freie austreten, sondern werden durch das Gehäuse gezwungen, wieder durch die Eintrittsöffnungen in das Innere des Führungsrohres zu strömen.

Nach einer weiteren Ausführungsform der Erfindung weist das Führungsrohr einen Anschlag für eine Schulter der Zapfpistole auf. Moderne Zapfpistolen für Kraftstoff weisen einen Ringwulst mit Schrägflächen auf, an die das Führungsrohr angepaßt ist und für die das Führungsrohr den erwähnten Anschlag bildet.

Nach einer weiteren Ausbildung der Erfindung ist das Führungsrohr axial verschieblich und vorzugsweise in Richtung von der Einfüllsöffnung weg elastisch vorgespannt. An der Außenseite einer selbstschließenden Verschlußeinrichtung sammelt sich insbesondere bei den Tankstutzen von Kraftfahrzeugen im Laufe des Betriebes Schmutzwasser an. Es besteht die Gefahr, daß dieses Schmutzwasser beim Öffnen der Verschlußeinrichtung der Zapfpistole in das Innere des Behälters gelangt. Um dies zu vermeiden, ist nach einer weiteren vorteilhaften Ausführungsform der Erfindung das Gehäuse in Höhe der Einfüllöffnung mit Ablauföffnungen versehen, die vorzugsweise beim Befüllen des Behälters verschließbar sind. Durch diese Ablauföffnungen kann Schmutzwasser abgeleitet werden, das sich sonst vor der Verschlußeinrichtung ansammeln würde.

Da die Ablauföffnungen beim Befüllen des Behälters verschließbar sind, ist vermieden, daß die aus dem Behälter austretenden Gase auf dem selben Weg ins Freie gelangen.

Die Verschließbarkeit der Ablauföffnungen wird vorzugsweise dadurch erreicht, daß nach einer weiteren vorteilhaften Ausführungsform der Erfindung an dem axialverschieblichen Führungsrohr eine die Ablauföffnungen bei eingeführter Zapfpistole verschließende Dichtung angeordnet ist. Die Dichtung ist so angeordnet, daß beim axialen Verschieben des Führungsrohres durch Einführung der Zapfpistole die Schließfunktion automatisch erfüllt wird.

Nach einer weiteren vorteilhaften Ausführungsform der Erfindung weist das Gehäuse einen bei dem Anschlag für die Schulter der Zapfpistole liegenden Vorsprung auf, derart daß die Schulter der Zapfpistole zwischen dem Anschlag und dem Vorsprung einrastbar ist. Durch diesen Vorsprung wird die Zapfpistole beim Befüllen sicher in einer exakt definierten Position gehalten.

Die Erfindung wird im folgenden an Hand eines in den Figuren schematisch dargestellten Ausführungsbeispieles näher erläutert. Es zeigt:
- Figur 1:: einen Kraftstoffbehälterverschluß im Längsschnitt,
- Figur 2:: den Kraftstoffbehälterverschluß gemäß Figur 1 in der Draufsicht,
- Figur 3:: den Kraftstoffbehälterverschluß wie in Figur 1, jedoch mit eingeführter Zapfpistole.

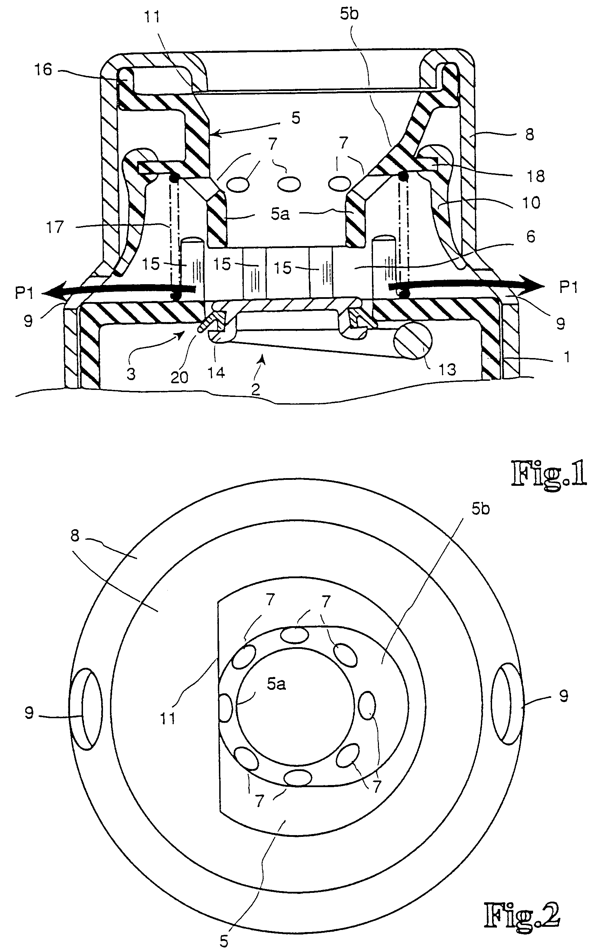

In Figur 1 ist ein Einfüllstutzen 1 eines Kraftfahrzeuges zu erkennen, der eine Einfüllöffnung 3 aufweist, die durch eine Verschlußklappe 2 abgeschlossen ist. Die Verschlußklappe 2 besteht aus einem Tragarm 12, der auf einer Welle 13 drehbar gelagert ist. Durch eine Feder (nicht dargestellt) wird der Tragarm in Richtung auf die Einfüllöffnung 3 vorgespannt. An dem Tragarm ist ein Verschlußkörper 14 befestigt, der eine umlaufende Nut aufweist, in der eine Dichtung 20 angeordnet ist. Wie in Figur 1 zu erkennen ist, paßt der Verschlußkörper 14 mit seiner Dichtung 20 dichtend in die Einfüllöffnung 3, sodaß in diesem Zustand die Einfüllöffnung, insbesondere durch die Wirkung der Vorspannungsfeder, dicht verschlossen ist. Am Rand der Einfüllöffnung 3 des Einfüllstutzens 1 sind sechs sich in Längsrichtung erstreckende Zapfen 15 angeordnet, von denen in der Schnittdarstellung der Figur 1 lediglich vier zu erkennen sind. Der Einfüllstutzen 1 ist in seinem Mündungsbereich von einem aufsatzartigen Gehäuse 8 umgeben, das an der von der Behälterseite abgewandten Seite der Einfüllöffnung einen etwas reduzierten Durchmesser aufweist. An seinem freien Ende ist der Rand des Gehäuses 8 nach innen umgestülpt. An einer Seite (in der Zeichnung links) bildet der umgestülpte Randbereich einen geradlinig verlaufenden Vorsprung 11 (siehe auch Figur 2). In Höhe der Verschlußklappe 2 weist das Gehäuse 8 zwei Ablauföffnungen 9 auf.

Innerhalb des zylinderischen Gehäuses 8 ist ein Führungsrohr 5 angeordnet. Das Führungsrohr 5 weist einen konischen Abschnitt 5b auf, der als Anschlag für einen entsprechend geformten Ringwulst einer Zapfpistole dient. Der konische Abschnitt 5b geht in einen Zylinderabschnitt mit reduziertem Radius über, der nachfolgend als Verjüngungsabschnitt 5a bezeichnet wird. In der Nähe des konischen Abschnitts 5b, etwas weiter in Richtung auf die Einfüllöffnung 3 gelegen, ist das Führungsrohr 5 mit insgesamt acht Radialbohrungen versehen, die als Eintrittsöffnungen 7 für aus dem Behälter während des Befüllens entweichende Gase dienen, was weiter unten im Detail beschrieben wird. Die zur Einfüllöffnung 3 weisende Endkante des Führungsrohres 5 weist zum Rand der Einfüllöffnung einen Abstand auf, sodaß eine ringförmige Austrittsöffnung 6 gebildet ist.

Das Führungsrohr 5 ist innerhalb des Gehäuses 8 axial verschieblich. Zur axialen Führung des Führungsrohres 5 dient ein an der Innenwand des Gehäuses 8 anliegendes Zylinderteil 16. Eine Verkantung des Führungrohres 5 bei der axialen Verschiebung wird durch die den zylindrischen Abschnitt 5a umgebenden Zapfen 15 vermieden, die auf diese Weise eine axiale Gleitführung darstellen. Durch eine Druckfeder 17, die sich auf dem Mündungsrand der Einfüllöffnung 3 abstützt wird das Führungsrohr 5 in der Weise belastet, daß es sich von der Einfüllöffnung wegbewegt.

Das Führungsrohr 5 weist einen umlaufenden radial nach außen gericheteten Steg 18 auf, an dem sich das andere Ende der Druckfeder 17 anlegt. Der Steg 18 liegt in der Zeichnung oberhalb der Eintrittsöffnungen 7, d.h. er ist von der Mündungsöffnung weiter entfernt als die Eintrittsöffnungen 7. Der Steg 18 trägt eine umlaufende Dichtung 10, die grob etwa die Form eines Kegelstumpfmantels aufweist. Die Dichtung 10 ist so bemessen, daß sie in der in Figur 1 gezeigten Position des Führungsrohres 5 nicht bis zum Einfüllstutzen 1 reicht und insbesondere nicht die Ablauföffnungen 9 verschließt. Im Ruhezustand des Kraftstoffbehälterverschlusses kann sich somit kein Schmutzwasser vor der Verschlußklappe 2 ansammeln, da dieses zwischen den Zapfen 15 hindurch entlang der Pfeile P1 über die Ablauföffnungen 9 nach außen fließt.

Figur 2 zeigt den Kraftstoffbehälterverschluß gemäß Figur 1 in der Draufsicht. Es ist insbesondere das Führungsrohr 5 mit seinem Verjüngungsabschnitt 5a, dem Anschlag 5b und den Eintrittsöffnungen 7 zu erkennen. Das Gehäuse 8, das mit den Ablauföffnungen 9 versehen ist, weist (in der Zeichnung links) einen Vorsprung 11 auf, der eine gerade Kante hat.

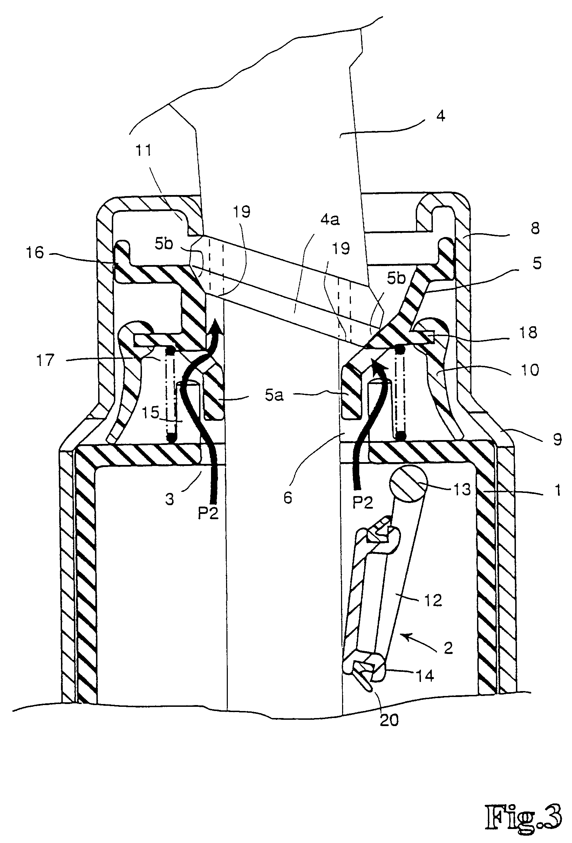

Figur 3 zeigt den Kraftstoffbehälterverschluß mit einer eingeführten Kraftstoffzapfpistole 4. Die Zapfpistole 4 weist einen (genormten) Ringwulst 4a auf, an dessen Unterseite sich Öffnungen 19 für ein Gasabsaugsystem befinden. Durch den Ringwulst 4a der Zapfpistole 4, der an dem Anschlag 5b des Führungsrohres 5 anschlägt, ist das Führungsrohr 5 gegen die Wirkung der Feder 17 in Richtung auf die Einfüllöffnung 3 verschoben. Die Unterkante des Führungsrohres weist zur Mündungsöffnung dennoch einen ausreichenden Abstand auf, sodaß die Austrittsöffnung 6 erhalten bleibt. Durch die erfolgte Axialverschiebung des Führungsrohres 5 in Richtung auf die Einfüllöffnung 3 hat die an dem Steg 18 angeordnete Dichtung 10 den Rand der Einfüllöffnung erreicht und liegt an diesem dichtend an, sodaß der Weg zu den Ablauföffnungen 9 gesperrt ist.

Wie in Figur 3 ebenfalls zu erkennen ist, ist die Verschlußklappe 2 entgegen der Wirkung der (nicht gezeigten) Torsionsfeder durch die Zapfpistole 4 in die Offenstellung gestoßen.

Wie weiters in Figur 3 zu erkennen ist, hintergreift der Ringwulst 4a der Zapfpistole 4 den Vorsprung 11, sodaß der Ringwulst zwischen dem Anschlag 5b des Führungsrohres 5 und dem Vorsprung 11 beim Befüllvorgang sicher gehalten wird.

Kraftstoffdämpfe, die beim Befüllen des Kraftstoffbehälters aus diesem verdrängt werden, strömen entlang der Zapfpistole 4 durch den zwischen der Zapfpistole 4 und der Einfüllöffnung 3 verbleibenden Ringspalt und treten dann zwischen den Zapfen 15 auf die Außenseite des Führungsrohres 5. Durch die Dichtung 10, die als Leiteinrichtung wirkt, wird verhindert, daß die Kraftstoffdämpfe ins Freie gelangen. Vielmehr werden diese durch die Wirkung der Dichtung 10 über die Eintrittsöffnungen 7 in das Innere des Führungsrohres zurückgeleitet und werden von den Öffnungen 19 an der Unterseite des Ringwulstes 4a der Zapfpistole 4 aufgesaugt. Durch die Dichtung wird darüberhinaus verhindert, daß Luft über die Ablauföffnungen 9 angesaugt wird und in das Gasabsaugsystem gelangt, das durch die "Falschluft" nur zusätzlich belastet würde. Vielmehr strömt bei dem Kraftstoffbehälterverschluß praktisch nur Dampf aus dem Kraftstoffbehälter in das Absaugsystem entlang den mit P2 bezeichneten Pfeilen.

Durch den verschlungenen Weg der Kraftstoffdämpfe ist sichergestellt, daß keine Kraftstofftröpfchen, jedenfalls keine größeren Tröpfchen, mit dem Strom mitgerissen werden. Diese werden vielmehr aus dem Strom ausgeschleudert. Dies ist besonders dann von Bedeutung, wenn die Kraftstoffzapfpistole 4 noch nicht die in Figur 3 gezeigte Endstellung angenommen hat, sondern der Mündungsrand der Zapfpistole gerade an der Verschlußklappe 2 anschlägt und diese aus der Einfüllöffnung drückt. In diesem Moment entweichen häufig Kraftstoffdämpfe, die sich unter Druck im Inneren des Kraftstoffbehälters angesammelt haben und die flüssigen Kraftstoff, beispielsweise Kraftstoff, der aus Zapfpistole träufelt, mitreißen.

In dem in den Figuren beschriebenen Ausführungsbeispiel besteht die Leiteinrichtung zur Führung der Kraftstoffdämpfe im wesentlichen aus der Dichtung 10, die die über die Austrittsöffnungen 6 ausströmende Dämpfe wieder zurück in das Führungsrohr 5 über die Öffnungen 7 leitet. Es ist jedoch auch möglich, auf die Ablauföffnungen 9 zu verzichten, insbesondere dann, wenn auf andere Weise dafür gesorgt ist, daß kein Schmutzwasser zur Einfüllöffnung 3 gelangt. In diesem Fall kann auch die Dichtung 10 weggelassen werden, worauf das Gehäuse 8 die Funktion der Leiteinrichtung übernimmt.

## Patentansprüche

1. Behälterverschluß mit einer selbstschließenden am Mündungsrand eines Einfüllstutzens (1) angeordneten Verschlußeinrichtung, die aus einem Verschlußteil (2) und einer durch das Verschlußteil (2) verschließbaren Einfüllöffnung (3) besteht, zwischen deren Rand und einer einzuführenden Zapfpistole (4) ein Gasaustrittsspalt für beim Befüllen des Behälters austretende Gase verbleibt, und mit einem Führungsrohr (5) zur Aufnahme der Zapfpistole, **dadurch gekennzeichnet**, daß das Führungsrohr (5) einen die Zapfpistole (4) eng umschließenden Verjüngungsabschnitt (5a) aufweist, daß an der zum Einfüllstutzen (1) gelegenen Seite des Verjüngungsabschnittes (5a) Austrittsöffnungen (6) vorgesehen sind, über die die Gase aus dem Führungsrohr (5) nach außen treten, daß an der vom Behälter abgewandten Seite des Verjünungsabschnittes (5a) Eintrittsöffnungen (7) angeordnet sind, über die Gase in das Innere des Führungsrohres (5) eintreten, und daß eine die Austrittsöffnungen (6) und die Eintrittsöffnungen (7) strömungsmäßig verbindende Leiteinrichtung vorgesehen ist.

2. Behälterverschluß nach Anspruch 1, dadurch gekennzeichnet, daß die Leiteinrichtung ein das Führungsrohr (5) und den Mündungsrand des Einfüllstutzens (1) dicht umschließendes Gehäuse (8) aufweist.

3. Behälterverschluß nach Anspruch 1 oder 2, dadurch gekennzeichnet, daß das Führungsrohr (5) einen Anschlag (5b) für eine Schulter (4a) der Zapfpistole (4) aufweist.

4. Behälterverschluß nach einem der Ansprüche 1 bis 3, dadurch gekennzeichnet, daß das Führungsrohr (5) axial verschieblich gelagert ist.

5. Behälterverschluß nach Anspruch 4, dadurch gekennzeichnet, daß das Führungsrohr (5) in Richtung von der Einfüllöffnung (3) weg elastisch vorgespannt ist.

6. Behälterverschluß nach Anspruch 2 und einem der Ansprüche 1 bis 5, dadurch gekennzeichnet, daß das Gehäuse (8) in Höhe der Einfüllöffnung (3) Ablauföffnungen (9) aufweist.

7. Behälterverschluß nach Anspruch 6, dadurch gekennzeichnet, daß die Ablauföffnungen (9) beim Befüllen des Behälters verschließbar sind.

8. Behälterverschluß nach Anspruch 7, dadurch gekennzeichnet, daß an dem Führungsrohr (5) eine die Ablauföffnungen (9) bei eingeführter Zapfpistole verschließende Dichtung (10) angeordnet ist.

9. Behälterverschluß nach den Ansprüchen 2 und 3, dadurch gekennzeichnet, daß das Gehäuse (8) einen bei dem Anschlag (5b) für die Schulter (4a) der Zapfpistole (4) liegenden Vorsprung (11) aufweist, derart, daß die Schulter (4a) der Zapfpistole (4) zwischen dem Anschlag (5b) und dem Vorsprung (11) einrastbar ist.
